# FASCICULE DE BREVET EUROPEEN

(11) **EP 0 739 794 B1**
(45) Date de publication et mention de la délivrance du brevet: **08.12.1999**
(21) Numéro de dépôt: 96400890.8
(22) Date de dépôt: 25.04.1996
(51) Int. Cl.: B60S 1/34

(54) **Mécanisme d'essuie-glace comportant des moyens d'étanchéité perfectionnés**
Scheibenwischvorrichtung mit verbesserten Dichtungsmitteln
Windscreen wiper mechanism with perfectionated sealing means

(30) Priorité: 28.04.1995 FR 9505251
(43) Date de publication de la demande: 30.10.1996
(73) Titulaire: VALEO SYSTEMES D'ESSUYAGE, 78321 La Verrière (FR)
(72) Inventeur: Collinet, Laurent, 86270 La Roche Posay (FR); Bouy, Gilbert, 86100 Chatellerault (FR)
(74) Mandataire: Kohn, Philippe

(56) Documents cités:
- AT-B- 313 083
- FR-A- 1 122 986
- FR-A- 2 673 153

## Description

La présente invention concerne un mécanisme d'essuie-glace.

L'invention concerne plus particulièrement un mécanisme d'essuie-glace du type comportant un arbre d'entraînement en rotation d'un bras d'essuie-glace qui traverse une ouverture formée dans la tôle de la carrosserie du véhicule équipé de cet essuie-glace, avec interposition d'un dispositif de guidage et d'étanchéité.

Selon une conception connue décrite et représentée dans le document FR-A-2 673 153, le dispositif de guidage et d'étanchéité comprend un fût de guidage en rotation de l'arbre d'essuie-glace qui s'étend à travers l'ouverture de la carrosserie, dont une collerette radiale s'étend en regard de la face interne de la tôle avec interposition d'un joint annulaire interne d'étanchéité et dont l'extrémité libre qui fait saillie audelà de la face externe de la töle comporte un filetage sur lequel est monté vissé un écrou de serrage dont la face radiale de serrage coopère avec la face externe de la tôle avec interposition d'un joint annulaire externe d'étanchéité.

Cette conception permet d'assurer un guidage en rotation de l'arbre d'entraînement de l'essuie-glace dans le fût, au niveau de sa traversée de la tôle de la carrosserie, tout en assurant une bonne étanchéité de l'ouverture formée dans la tôle de la carrosserie à cet effet, évitant ainsi toute pénétration intempestive d'eau à l'intérieur du véhicule.

On constate toutefois que l'étanchéité est parfois de qualité insuffisante lorsque la partie de la tôle dans laquelle est formée l'ouverture n'est pas plane et/ou ne s'étend pas dans un plan perpendiculaire à l'axe général du fût du dispositif de guidage, c'est-à-dire perpendiculaire à l'axe de serrage du dispositif.

Afin d'améliorer l'étanchéité, le document FR-A-1.122.986 (DE-C-974 732) propose un mécanisme du type dans lequel les faces supérieure du joint interne et inférieure du joint externe sont profilées pour épouser la forme de la tôle dans la partie de cette dernière qui entoure l'ouverture.

On constate toutefois que cette solution n'est pas entièrement satisfaisante dans la mesure où un liquide peut, en cas de serrage axial insuffisant des deux joints d'étanchéité, venir au contact des autres composants et notamment du fût de guidage en passant entre les deux joints le long de la tôle.

L'invention a pour but de proposer un mécanisme d'essuie-glace du type mentionné précédemment (FR-A-1 122 986 ou DE-C-974 732) qui permet de remédier à cet inconvénient.

Dans ce but, l'invention propose un mécanisme d'essuie-glace du type mentionné précédemment, caractérisé en ce que les deux joints d'étanchéité comportent des moyens d'indexation angulaire relative, et en ce que chaque joint comporte une demi-jupe annulaire cylindrique qui s'étend axialement depuis sa face d'étanchéité et les deux demi-jupes annulaires forment une douille qui s'étend axialement à travers l'ouverture de la tôle.

Selon divers modes de réalisation de l'invention :
- le mécanisme comporte des moyens d'indexation angulaire des joints d'étanchéité par rapport à l'ouverture ;
- les joints d'étanchéité sont indexés angulairement par rapport au fût de guidage et le fût de guidage est indexé angulairement par rapport à l'ouverture ;
- chaque joint est un joint annulaire sensiblement plat qui comporte une face plane d'appui perpendiculaire à son axe et la face inférieure d'appui du joint d'étanchéité interne comporte un ergot d'indexation qui est reçu dans une encoche complémentaire d'indexation formée dans la collerette du fût de guidage ;
- les faces d'étanchéité supérieure du joint interne et inférieure du joint externe sont des faces sensiblement planes inclinées par rapport à l'axe du fût;
- chaque joint est un joint annulaire sensiblement plat qui comporte une face plane d'appui perpendiculaire à son axe ;
- la face supérieure d'appui du joint externe coopère avec la face radiale de serrage de l'écrou et la face inférieure d'appui du joint interne coopère avec la collerette du fût de guidage ;
- chaque joint d'étanchéité comporte une face plane d'appui et une face plane d'étanchéité inclinée par rapport à la face plane d'appui ;
- le mécanisme comporte une rondelle de serrage interposée entre la face radiale de serrage de l'écrou et le joint externe d'étanchéité ;
- le mécanisme comporte un capuchon qui recouvre l'écrou de serrage et qui est fixé en position par emboîtement élastique ;
- le mécanisme comporte des moyens d'arrosage de la vitre à essuyer du type comportant une conduite d'alimentation en liquide de lavage portée par la collerette du fût de guidage et dont une extrémité libre supérieure traverse la tôle et est reliée à des moyens d'aspersion de la vitre ;
- les moyens d'aspersion comportent une buse d'aspersion intégrée au capuchon ;
- l'extrémité libre supérieure de la conduite est emboîtée élastiquement dans un logement complémentaire du capuchon pour assurer la fixation de ce dernier en position.

D'autres caractéristiques et avantages de l'invention apparaîtront à la lecture de la description détaillée qui va suivre pour la compréhension de laquelle on se reportera aux dessins annexés dans lesquels :
- La figure 1 est une vue latérale en élévation d'un mécanisme d'essuie-glace réalisé conformément aux enseignements de l'invention ;
- la figure 2 est une vue en perspective éclatée et à plus grande échelle des principaux composants du dispositif de guidage et d'étanchéité conforme aux enseignements de l'invention ;
- la figure 3 est une vue similaire à la partie supérieure de la figure 1 sur laquelle le dispositif de guidage et d'étanchéité est illustré partiellement en section axiale ;
- la figure 4 est une vue partiellement éclatée et en section axiale partielle d'une variante de réalisation du dispositif de guidage et d'étanchéité selon l'invention ; et
- la figure 5 est une vue en perspective qui illustre les composants de la figure 4 en position assemblée.

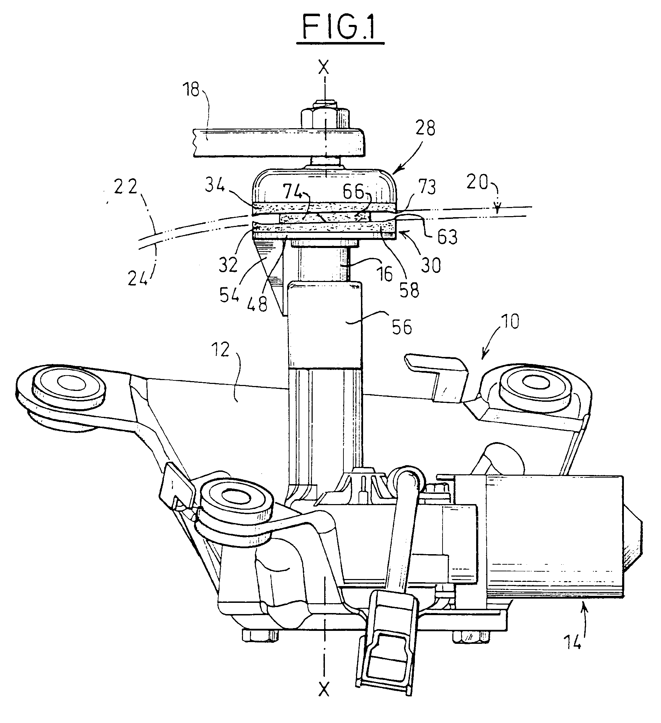

On a représenté sur la figure 1 un mécanisme d'essuie-glace 10 de conception générale connue comportant une platine-support 12 sur laquelle est fixé un ensemble motoréducteur 14 qui entraîne en rotation un arbre 16 d'entraînement en rotation alternée d'un essuie-glace dont le bras 18 est représenté partiellement sur la figure 1.

L'arbre 16, d'axe de rotation X-X, s'étend à travers une tôle 20 appartenant à la carrosserie ou à la caisse d'un véhicule automobile de manière que le bras d'essuie-glace 18 soit situé à l'extérieur au-delà de la face supérieure externe 22 de la tôle 20, tandis que les autres composants du mécanisme 10 sont situés en dessous de la face interne inférieure 24 de la tôle 20.

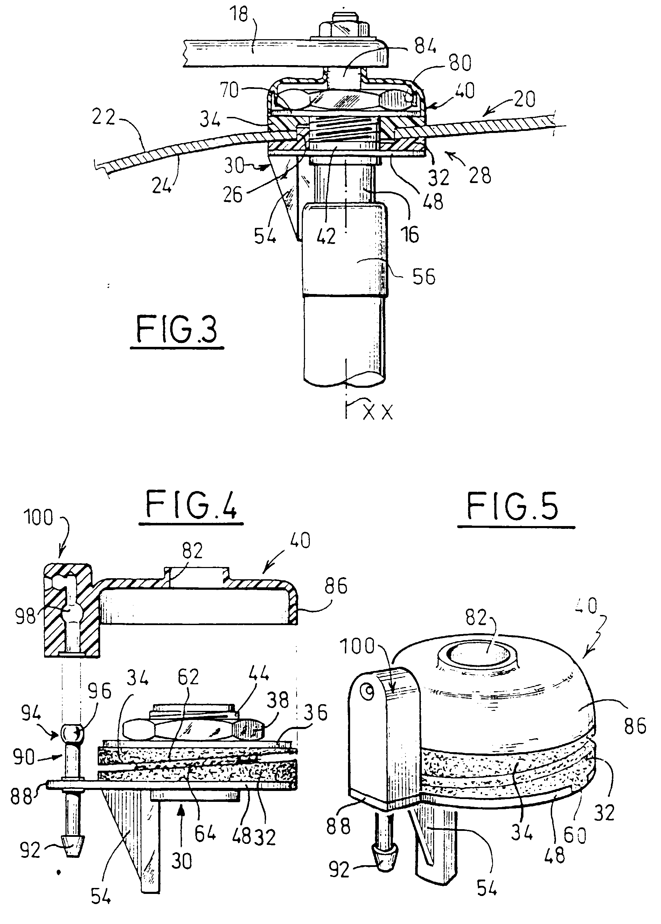

Afin d'assurer le guidage en rotation de l'arbre 16 au niveau de l'ouverture circulaire 26 formée dans la tôle 20 (voir figure 3), et selon une conception connue, il est prévu un dispositif 28 de guidage en rotation et d'étanchéité.

Selon une conception connue, le dispositif 28 comporte, disposés successivement de bas en haut selon l'axe X-X en considérant la figure 1, un fût de guidage 30, un joint annulaire interne d'étanchéité 32, un joint annulaire externe d'étanchéité 34, une rondelle de serrage 36, un écrou de serrage 38 et un capuchon 40.

Le fût 30 est une pièce rigide, qui est par exemple réalisée par moulage en matière plastique, qui est constituée pour l'essentiel par un manchon cylindrique 42 qui s'étend axialement à travers l'ouverture 26 de la tôle 20.

L'extrémité supérieure libre 44 du fût 42 qui s'étend axialement au-delà de la face supérieure 22 de la tôle 20 comporte un filetage 45 complémentaire du taraudage 46 de l'écrou de serrage 38.

L'extrémité inférieure du manchon 42 du fût de guidage 30 comporte une collerette radiale extérieure 48 qui, en position montée, est située à l'intérieur en dessous de la face interne 24 de la tôle 20.

La collerette 48 s'étend dans un plan perpendiculaire à l'axe du manchon 42, et donc à l'axe X-X de rotation de l'arbre 16, et elle délimite une face radiale d'appui plane 50 perpendiculaire à l'axe X-X.

La collerette 50 comporte une encoche d'indexation angulaire 52 formée au voisinage de son bord périphérique, diamétralement à l'opposé d'un doigt axial 54 d'indexation angulaire du fût 30 par rapport à une douille 56 de guidage en rotation de l'arbre 16 qui appartient au mécanisme 10.

Dans ce mode de réalisation dans lequel le fût 30 est indexé angulairement par rapport au mécanisme 10, le doigt d'indexation 54 s'étend axialement vers le bas depuis la collerette 48.

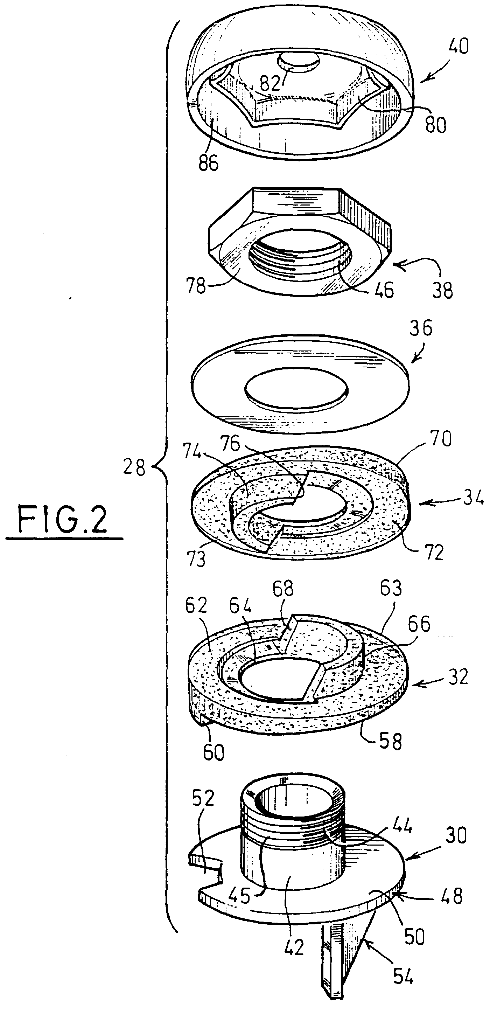

Comme on peut le voir sur les figures 1 et 2, le dispositif de guidage et d'étanchéité 28 est conçu de manière à assurer une étanchéité parfaite lorsque la tôle, dans la zone qui entoure l'ouverture circulaire 26, n'est pas parfaitement plane et/ou lorsqu'elle s'étend dans un plan qui n'est pas perpendiculaire à l'axe X-X.

A cet effet, les joints annulaires d'étanchéité 32 et 34 sont des joints à faces non parallèles.

Le joint annulaire d'étanchéité 32 comporte une face radiale plane d'appui 58 qui est perpendiculaire à l'axe du joint 32 et qui est prévue pour prendre appui contre la face 50 de la collerette 48 du fût de guidage 30.

Cette face 58 comporte, réalisé venu de matière par moulage, un ergot 60 d'indexation angulaire prévu pour être reçu dans l'encoche 52 de la collerette 48 de manière à assurer l'indexation angulaire relative du joint annulaire d'étanchéité 32 par rapport au fût de guidage 30 et donc indirectement par rapport à l'ouverture de la tôle 20.

Conformément aux enseignements de l'invention, le joint annulaire interne d'étanchéité 32 comporte une face supérieure d'étanchéité 62 qui est prévue pour coopérer de manière étanche, en position montée et serrée, avec la face interne 24 de la tôle 20.

Comme on peut le voir sur les figures, la face annulaire d'étanchéité 62 est sensiblement plane mais elle n'est pas parallèle à la face inférieure d'appui 58, c'est-à-dire qu'elle forme avec le plan de cette dernière un angle aigu destiné à compenser l'angle que forme la tôle 20 par rapport à l'axe X-X.

Le joint 32 est percé en son centre d'un trou circulaire 64 destiné à permettre le passage du manchon 42 du fût de guidage 30.

Le joint annulaire interne d'étanchéité 32 comporte une demi-jupe annulaire cylindrique 66 qui s'étend axialement depuis la face supérieure d'étanchéité 62.

La demi-jupe annulaire 66 est délimitée par une coupe 68 en plan incliné par rapport au plan vertical passant par l'axe X-X.

Le joint annulaire externe d'étanchéité 34 présente une conception similaire à celle du joint 32 et complémentaire de ce dernier.

A cet effet, le joint annulaire externe 34 comporte une face radiale d'appui 70 qui est une face plane perpendiculaire à l'axe du joint 34.

Le joint 34 comporte également une face annulaire d'étanchéité 72 qui forme un angle aigu par rapport à sa face radiale d'appui 70.

Le joint 34 comporte une demi-jupe annulaire 74 qui s'étend axialement depuis sa face d'étanchéité 72 et qui est délimité par une coupe en plan incliné 76 complémentaire de la coupe 68 de la demi-jupe 66 du joint 32.

Ainsi, et comme on peut le voir en position montée aux figures 1 et 3, les faces radiales d'appui 58 et 70 sont parallèles entre elles et sont toutes les deux perpendiculaires à l'axe X-X, tandis que les faces d'étanchéité inclinées 62 et 72 épousent l'inclinaison de la tôle 20 dans la partie de cette dernière qui entoure l'ouverture 26.

L'orientation relative des deux joints d'étanchéité 32 et 34 permettant d'assurer le parallélisme des faces radiales d'appui 58 et 70 est assurée grâce à l'emboîtement mutuel des deux demi-jupes 66 et 74 qui, en position montée, sont toutes les deux reçues dans l'ouverture 26 pour former une douille traversée par le manchon 42.

Afin d'améliorer encore l'étanchéité, chacune des faces d'étanchéité 62 et 72 peut comporter une lèvre périphérique d'étanchéité 63, 73 respectivement.

La rondelle 36 est une rondelle classique à faces planes et parallèles dont la face supérieure coopère avec la face radiale de serrage 78 de l'écrou 38.

En position montée du dispositif de guidage et d'étanchéité 28, et afin d'améliorer l'esthétique de la partie supérieure du dispositif qui fait saillie au-delà de la face externe supérieure 22 de la tôle 20, il est prévu un capuchon 40 qui est une pièce moulée en matière plastique comportant une empreinte interne 80 complémentaire du profil de l'écrou de serrage 38 permettant le montage par emboîtement élastique du capuchon 40 sur l'écrou 38.

Le capuchon 40 comporte un trou 82 pour le passage de l'extrémité supérieure 84 de l'arbre d'entraînement 16 sur laquelle est monté le bras d'essuie-glace 18.

Les dimensions de la jupe périphérique 86 du capuchon 40 sont également telles qu'elle recouvre la rondelle 36.

On décrira maintenant la variante de réalisation illustrée aux figures 4 et 5 sur lesquelles des composants identiques ou similaires à ceux décrits précédemment sont désignés par les mêmes chiffres de référence.

Selon une conception connue, la collerette 48 du fût de guidage 30 se prolonge radialement vers l'extérieur par une patte 88 servant de support à une conduite 90 pour le passage d'un liquide de lavage.

La conduite 90 et la patte 88 sont réalisées venues de matière par moulage avec le fût 30 et sa collerette 48.

L'extrémité inférieure 92 de la conduite est prévue pour le raccordement d'un tuyau (non représenté) d'alimentation en liquide de lavage tandis que l'extrémité supérieure 94 de la conduite 90 fait saillie, en position montée, au-delà de la face externe supérieure 22 de la tôle 20 à travers une ouverture complémentaire prévue à cet effet dans la tôle.

Conformément à un mode de réalisation de l'invention, l'extrémité supérieure 94 est réalisée sous la forme d'une tête sphérique 96 qui est prévue pour être emboîtée élastiquement dans un logement complémentaire 98 formé dans le corps d'une buse de lavage 100 réalisée venue de matière par moulage avec le capuchon 40 et qui s'étend radialement vers l'extérieur par rapport à la jupe 86 de ce dernier.

L'emboîtement de la tête sphérique 96 dans le logement 98, outre le raccordement de la conduite 90 avec la buse 100, assure également le montage en position par emboîtement élastique du capuchon 40.

## Revendications

1. Mécanisme d'essuie-glace (10) du type comportant un arbre (16) d'entraînement en rotation d'un bras d'essuie-glace (18) qui traverse une ouverture (26) formée dans la tôle (20) de la carrosserie du véhicule avec interposition d'un dispositif (28) de guidage et d'étanchéité qui comprend un fût (30, 42) de guidage qui s'étend à travers l'ouverture (26), dont une collerette radiale (48) s'étend en regard de la face interne (24) de la tôle (20) avec interposition d'un joint annulaire interne d'étanchéité (32) et dont l'extrémité libre (44) qui fait saillie au-delà de la face externe (22) de la tôle (20) comporte un filetage sur lequel est monté vissé un écrou de serrage (38) dont la face radiale de serrage (78) coopère avec la face externe (22) de la tôle (20) avec interposition d'un joint annulaire externe d'étanchéité (34), et du type dans lequel les faces supérieure (62) du joint interne (32) et inférieure (72) du joint externe (34) sont profilées pour épouser la forme de la tôle (20) dans la portion de cette dernière qui entoure l'ouverture (26), caractérisé en ce que les deux joints d'étanchéité (32, 34) comportent des moyens d'indexation angulaire relative (66),74), et en ce que chaque joint (32, 34) comporte une demi-jupe annulaire cylindrique (66, 74) qui s'étend axialement depuis sa face d'étanchéité (62, 72) et en ce que les deux demi-jupes annulaires (66, 74) forment une douille qui s'étend axialement à travers l'ouverture (26) de la tôle (20).

2. Mécanisme d'essuie-glace selon la revendication précédente, caractérisé en ce qu'il comporte des moyens (60, 52, 54) d'indexation angulaire des joints d'étanchéité (32, 34) par rapport à l'ouverture (26).

3. Mécanisme d'essuie-glace selon la revendication précédente, caractérisé en ce que les joints d'étanchéité (32, 34) sont indexés angulairement par rapport au fût de guidage (30, 52), et en ce que le fût de guidage (30, 54) est indexé angulairement par rapport à l'ouverture (26).

4. Mécanisme d'essuie-glace selon la revendication précédente, caractérisé en ce que chaque joint (32, 34) est un joint annulaire sensiblement plat qui comporte une face plane d'appui (58, 70) perpendiculaire à son axe et en ce que la face inférieure d'appui (58) du joint d'étanchéité interne (32) comporte un ergot (60) d'indexation qui est reçu dans une encoche complémentaire d'indexation (52) formée dans la collerette (48) du fût de guidage (30).

5. Mécanisme d'essuie-glace selon l'une quelconque des revendications précédentes, caractérisé en ce que les faces d'étanchéité supérieure (62) du joint interne (32) et inférieure (72) du joint externe (34) sont des faces sensiblement planes inclinées par rapport a l'axe (X-X) du fût (30, 42).

6. Mécanisme d'essuie-glace selon l'une quelconque des revendications précédentes, caractérisé en ce que chaque joint (32, 34) est un joint annulaire sensiblement plat qui comporte une face plane d'appui (58, 70) perpendiculaire à son axe.

7. Mécanisme d'essuie-glace selon la revendication 6, caractérisé en ce que la face supérieure d'appui (70) du joint externe (34) coopère avec la face radiale (78) de serrage de l'écrou (38), et en ce que la face inférieure d'appui (58) du joint interne (32) coopère avec la collerette (48, 50) du fût de guidage (30).

8. Mécanisme d'essuie-glace selon l'une des revendications 6 ou 7 prises en combinaison avec la revendication 5, caractérisé en ce que chaque joint (32, 34) d'étanchéité comporte une face plane d'appui (58, 70) et une face plane d'étanchéité (62, 72) inclinée par rapport à la face plane d'appui (58, 70).

9. Mécanisme d'essuie-glace selon l'une quelconque des revendications précédentes, caractérisé en ce qu'il comporte une rondelle de serrage (36) interposée entre la face radiale de serrage (78) de l'écrou (38) et le joint externe d'étanchéité (34).

10. Mécanisme d'essuie-glace selon l'une quelconque des revendications précédentes, caractérisé en ce qu'il comporte un capuchon (40) qui recouvre l'écrou de serrage (38) et qui est fixé en position par emboîtement élastique.

11. Mécanisme d'essuie-glace selon l'une quelconque des revendications précédentes, caractérisé en ce qu'il comporte des moyens d'arrosage de la vitre à essuyer du type comportant une conduite (90) d'alimentation en liquide de lavage porté par la collerette (48) du fût de guidage (30) et dont une extrémité libre supérieure (94, 96) traverse la tôle (20) et est reliée à des moyens (100) d'aspersion de la vitre à essuyer.

12. Mécanisme d'essuie-glace selon la revendication 11 prise en combinaison avec la revendication 10, caractérisé en ce que les moyens d'aspersion comportent une buse (100) d'aspersion intégrée au capuchon (40).

13. Mécanisme d'essuie-glace selon la revendication 12, caractérisé en ce que l'extrémité libre supérieure (94, 96) de la conduite (90) est emboîtée élastiquement dans un logement complémentaire (98) du capuchon (40) pour assurer la fixation de ce dernier en position.

## Claims

1. A screen wiper mechanism (10) of the type comprising a spindle (16) for driving in rotation a screen wiper arm (18) that extends through an aperture (26) formed in the shell of the bodywork of the vehicle, with a guide and sealing device (28) being interposed, the latter comprising a guide boss (30, 42) which extends through the aperture (26), and which has a radial collar portion (48) lying facing the inner surface (24) of the shell (20), with an annular inner sealing member (32) being interposed, the free end portion (44) of the guide boss that projects beyond the outer surface (22) of the shell (20) having a thread on which a securing nut (38) is screwed, the radial clamping face (78) of the nut cooperating with the outer surface (22) of the shell (20) with an annular outer sealing member (34) being interposed, and of the type in which the upper face (62) of the inner sealing member (32) and the lower face (72) of the outer sealing member (34) are profiled in such a way as to match the form of the shell (20) in the portion of the latter which surrounds the aperture (26), characterised in that the two sealing members (32, 34) have angular relative indexing means (66, 74), and in that each sealing member (32, 34) includes an annular cylindrical semi-skirt portion (66, 74) which extends axially from its sealing face (62, 72), and in that the two annular semi-skirt portions (66, 74) constitute a sleeve which extends axially through the aperture (26) in the shell (20).

2. A screen wiper mechanism according to the preceding Claim, characterised in that it includes angular means (60, 52, 54) for indexing the sealing members (32, 34) with respect to the aperture (26).

3. A screen wiper mechanism according to the preceding Claim, characterised in that the sealing members (32, 34) are indexed angularly with respect to the guide boss (30, 52), and in that the guide boss (30, 54) is indexed angularly with respect to the aperture (26).

4. A screen wiper mechanism according to the preceding Claim, characterised in that each sealing member (32, 34) is a substantially flat annular gasket which has a flat engagement face (58, 70) at right angles to its axis, and in that the lower engagement face (58) of the inner sealing member (32) includes an indexing lug (60) which is received in a complementary indexing notch (52) formed in the collar portion (48) of the guide boss (30).

5. A screen wiper mechanism according to any one of the preceding Claims, characterised in that the upper sealing surface (62) of the inner sealing member (32) and the lower sealing surface (72) of the outer sealing member (34) are substantially flat surfaces which are inclined with respect to the axis (X-X) of the boss (30, 42).

6. A screen wiper mechanism according to any one of the preceding Claims, characterised in that each sealing member (32, 34) is a substantially flat annular gasket which includes a flat engagement face (58, 70) at right angles to its axis.

7. A screen wiper mechanism according to Claim 6, characterised in that the upper engagement face (70) of the outer sealing member (34) is in cooperation with the radial clamping face (78) of the nut (38), and in that the lower engagement face (58) of the inner sealing member (32) is in cooperation with the collar portion (48, 50) of the guide boss (30).

8. A screen wiper mechanism according to Claim 6 or Claim 7 taken in combination with Claim 5, characterised in that each sealing member (32, 34) has a flat engagement face (58, 70) and a flat sealing face (62, 72) which is inclined with respect to the flat engagement face (58, 70).

9. A screen wiper mechanism according to any one of the preceding Claims, characterised in that it includes a clamping washer (36) interposed between the radial clamping face (78) of the nut (38) and the outer sealing member (34).

10. A screen wiper mechanism according to any one of the preceding Claims, characterised in that it includes a cap (40) which covers the clamping nut (38) and which is fixed in position by elastic insertion.

11. A screen wiper mechanism according to any one of the preceding Claims, characterised in that it includes means for spraying the glass to be swept, of the type comprising a washing liquid feed duct (90), carried by the collar portion (48) of the guide boss (30) and having an upper free end (94, 96) which extends through the shell (20) and is connected to means (100) for spraying the glass to be swept.

12. A screen wiper mechanism according to Claim 11 taken in combination with Claim 10, characterised in that the spraying means include a spray nozzle (100) incorporated in the cap (40).

13. A screen wiper mechanism according to Claim 12, characterised in that the upper free end (94, 96) of the duct (90) is inserted elastically into a complementary seating (98) in the cap (40) so as to secure the latter in position.

## Patentansprüche

1. Scheibenwischvorrichtung (10), umfassend eine Drehantriebswelle (16) für einen Scheibenwischerarm (18), die durch eine im Blech (20) der Karosserie des Fahrzeugs ausgebildete Öffnung (26) unter Einfügung einer Führungs- und Dichtungsvorrichtung (28) hindurchgeht, die einen Führungsschaft (30, 42) umfaßt, der sich durch die Öffnung (26) hindurch erstreckt, von dem sich ein radialer Kragen (48) gegenüber der Innenfläche (24) des Blechs (20) unter Einfügung eines inneren Dichtungsrings (32) erstreckt und dessen jenseits der Außenfläche (22) des Blechs (20) vorstehendes freies Ende (44) ein Außengewinde umfaßt, auf dem eine Klemmutter (38) aufgeschraubt ist, deren radiale Klemmfläche (78) mit der Außenfläche (22) des Blechs (20) unter Einfügung eines äußeren Dichtungsrings (34) zusammenwirkt, wobei die Oberseite (62) des inneren Dichtungsrings (32) und die Unterseite (72) des äußeren Dichtungsrings (34) profiliert sind, um sich an die Form des Blechs (20) in dessen Abschnitt, der die Öffnung (26) umgibt, anzupassen, **dadurch gekennzeichnet,** daß die zwei Dichtungsringe (32, 34) Mittel zur relativen Winkelverrastung (66, 74) umfassen und daß jeder Dichtungsring (32, 34) eine zylindrische kreisförmige Teileinfassung (66, 74) enthält, die sich axial von seiner Dichtungsfläche (62, 72) aus erstreckt, und daß die beiden ringförmigen Teileinfassungen (66, 74) eine Hülse bilden, die sich axial durch die Öffnung (26) des Blechs (20) erstreckt.

2. Scheibenwischvorrichtung nach dem vorangehenden Anspruch, **dadurch gekennzeichnet,** daß sie Mittel (60, 52, 54) zur Winkelverrastung der Dichtungsringe (32, 34) im Verhältnis zur Öffnung (26) umfaßt.

3. Scheibenwischvorrichtung nach dem vorangehenden Anspruch, **dadurch gekennzeichnet,** daß die Dichtungsringe (32, 34) im Verhältnis zum Führungsschaft (30, 52) winklig verrastet sind und daß der Führungsschaft (30, 54) im Verhältnis zur Öffnung (26) winklig verrastet ist.

4. Scheibenwischvorrichtung nach dem vorangehenden Anspruch, **dadurch gekennzeichnet,** daß jeder Dichtungsring (32, 34) ein weitgehend flacher Dichtring ist, der eine zu seiner Achse senkrechte ebene Auflagefläche (58, 70) umfaßt, und daß die untere Auflagefläche (58) des inneren Dichtungsrings (32) eine Rastnase (60) umfaßt, die in eine formschlüssige Rastausnehmung (52) eingreift, die im Kragen (48) des Führungsschafts (30) ausgebildet ist.

5. Scheibenwischvorrichtung nach einem der vorangehenden Ansprüche, **dadurch gekennzeichnet,** daß die obere Dichtungsfläche (62) des inneren Dichtungsrings (32) und die untere Dichtungsfläche (72) des äußeren Dichtungsrings (34) im Verhältnis zur Achse (X-X) des Schafts (30, 42) geneigte, weitgehend ebene Flächen sind.

6. Scheibenwischvorrichtung nach einem der vorangehenden Ansprüche, **dadurch gekennzeichnet,** daß jeder Dichtungsring (32, 34) ein weitgehend flacher Dichtring ist, der eine zu seiner Achse senkrechte ebene Auflagefläche (58, 70) umfaßt.

7. Scheibenwischvorrichtung nach Anspruch 6, **dadurch gekennzeichnet,** daß die obere Auflagefläche (70) des äußeren Dichtungsrings (34) mit der radialen Klemmfläche (78) der Mutter (38) zusammenwirkt und daß die untere Auflagefläche (58) des inneren Dichtungsrings (32) mit dem Kragen (48, 50) des Führungsschafts (30) zusammenwirkt.

8. Scheibenwischvorrichtung nach einem der Ansprüche 6 oder 7 in Kombination mit Anspruch 5, **dadurch gekennzeichnet,** daß jeder Dichtungsring (32, 34) eine ebene Auflagefläche (58, 70) und eine im Verhältnis zur ebenen Auflagefläche (58, 70) geneigte ebene Dichtungsfläche (62, 72) umfaßt.

9. Scheibenwischvorrichtung nach einem der vorangehenden Ansprüche, **dadurch gekennzeichnet,** daß sie eine Klemmscheibe (36) umfaßt, die zwischen der radialen Klemmfläche (78) der Mutter (38) und dem äußeren Dichtungsring (34) eingefügt ist.

10. Scheibenwischvorrichtung nach einem der vorangehenden Ansprüche, **dadurch gekennzeichnet,** daß sie eine Abdeckkappe (40) umfaßt, die die Klemmutter (38) abdeckt und die durch elastische Einpassung in Position befestigt ist.

11. Scheibenwischvorrichtung nach einem der vorangehenden Ansprüche, **dadurch gekennzeichnet,** daß sie Spritzmittel zum Besprühen der zu wischenden Scheibe umfaßt, enthaltend eine Zuleitung (90) für die Waschflüssigkeit, die am Kragen (48) des Führungsschafts (30) angebracht ist und von der ein oberes freies Ende (94, 96) durch das Blech (20) hindurchgeht und mit Spritzmitteln (100) zum Besprühen der zu wischenden Scheibe verbunden ist.

12. Scheibenwischvorrichtung nach Anspruch 11 in Kombination mit Anspruch 10, **dadurch gekennzeichnet,** daß die Spritzmittel eine in die Abdeckkappe (40) integrierte Spritzdüse (100) umfassen.

13. Scheibenwischvorrichtung Anspruch 12, **dadurch gekennzeichnet,** daß das obere freie Ende (94, 96) der Zuleitung (90) elastisch in eine formschlüssige Aufnahme (98) der Abdeckkappe (40) eingepaßt ist, um deren Befestigung in Position herbeizuführen.
